# EUROPÄISCHE PATENTSCHRIFT

(11) **EP 0 751 045 B1**
(45) Veröffentlichungstag und Bekanntmachung des Hinweises auf die Patenterteilung: **10.12.2003**
(21) Anmeldenummer: 96107325.1
(22) Anmeldetag: 09.05.1996
(51) Int. Cl.: B60R 16/02

(54) **Stromerzeugungssystem für ein Fahrzeug mit Brennkraftmaschine**
Power supply system for a vehicle with an internal combustion engine
Système d'alimentation électrique pour un véhicule avec moteur à combustion interne

(30) Priorität: 26.06.1995 DE 19523109
(43) Veröffentlichungstag der Anmeldung: 02.01.1997
(73) Patentinhaber: DaimlerChrysler AG, 70567 Stuttgart (DE)
(72) Erfinder: Abersfelder, Günter, Dr., 71066 Sindelfingen (DE); Buchner, Helmut, Dr., 73666 Baltmannsweiler (DE)

(56) Entgegenhaltungen:
- DE-A- 3 528 673
- US-A- 4 199 713

## Beschreibung

Die Erfindung betrifft ein Stromerzeugungssystem für ein Fahrzeug mit Brennkraftmaschine gemäß Patentanspruch 1, sowie ein Verfahren zum Betreiben eines solchen Systems.

Bei herkömmlichen Fahrzeugen ist zur Erzeugung von elektrischer Energie eine Lichtmaschine vorgesehen, die von der Brennkraftmaschine angetrieben wird. Der von der Lichtmaschine gelieferte Strom wird zum einen den elektrischen Verbrauchern im Fahrzeug zur Verfügung gestellt. Zum anderen dient die Lichtmaschine auch zum Laden der Fahrzeugbatterie.

Aus der Patentschrift US-A 4,199,713 ist ein Fahrzeug bekannt, welches von einer Brennkraftmaschine angetrieben wird. Zur Erzeugung von elektrischer Energie zum Betreiben von im Fahrzeug angeordneter elektrischer Verbraucher wird anstelle einer Lichtmaschine ein thermionischer Wandler eingesetzt. Der thermionische Wandler wird direkt mit dem Kraftstoff versorgt, mit welchem die Brennkraftmaschine betrieben wird.

Aus der Patentschrift US-A 4,489,242 ist ein Fahrzeug bekannt, bei dem eine Brennkraftmaschine ausschließlich zum Antreiben des Fahrzeugs eingesetzt wird. Im Fahrzeug angeordnete Verbraucher werden von einer Batterie mit elektrischer Leistung versorgt. Das Nachladen der Batterie soll nicht über eine übliche Lichtmaschine erfolgen, sondern über eine von der Brennkraftmaschine unabhängige Ladeeinheit. Als Ladeeinheit wird neben anderen auch eine im Fahrzeug angeordnete Brennstoffzelle vorgeschlagen. Der Erfindung liegt die Aufgabe zugrunde, ein Stromerzeugungssystem für ein Fahrzeug mit Brennkraftmaschine zu schaffen, durch welches der Strom für die elektrischen Verbraucher bei verringertem Kraftstoffverbrauch und unabhängig von der momentanen Drehzahl der Brennkraftmaschine zur Verfügung gestellt werden kann. Außerdem ist es Aufgabe der Erfindung, ein Verfahren zum Betreiben eines solchen Systems zu schaffen.

Die Aufgabe wird erfindungsgemäß durch die kennzeichnenden Merkmale des Patentanspruchs 1 beziehungsweise 8 gelöst.

Die Verwendung eines Brennstoffzellensystems anstelle einer Lichtmaschine in einem Fahrzeug mit Brennkraftmaschine weist den Vorteil auf, daß der benötigte Strom aufgrund des besseren Wirkungsgrades der Brennstoffzelle mit deutlich verringertem Kraftstoffverbrauch bereitgestellt werden kann. Außerdem kann die Leistung der Brennstoffzelle unabhängig von der Drehzahl der Brennkraftmaschine eingestellt werden, so daß die momentan erzeugte elektrische Leistung an den jeweiligen Bedarf angepaßt werden kann. Bei Verwendung eines solchen Systems ist es vorteilhaft, mechanische Antriebe von Nebenaggregaten, wie zum Beispiel Lüfter oder Klimakompressor, durch Elektroantriebe zu ersetzen. Dadurch kann der Kraftstoffverbrauch weiter verringert werden.

Schließlich bietet eine Brennstoffzelle die Möglichkeit, elektrischen Strom auch bei abgeschalteter Brennkraftmaschine bereitzustellen, so daß Verbesserungen, beispielsweise bei der Klimatisierung des Fahrzeugs, ermöglicht werden.

Im folgenden wird der Aufbau eines solchen Stromerzeugungssystems anhand einer Prinzipzeichnung näher erläutert.

Das nicht näher gezeigte Fahrzeug wird mit Hilfe einer Brennkraftmaschine 1 angetrieben. Zur Versorgung der Brennkraftmaschine 1 mit flüssigem Kraftstoff ist ein Kraftstofftank 2 und eine Kraftstoffleitung 3 vorgesehen. Zur Erzeugung von elektrischer Energie ist außerdem eine Brennstoffzelle 4 im Fahrzeug angeordnet. Vorzugsweise kann hierfür eine H₂/O₂-Brennstoffzelle mit protonenleitender Membran, im folgenden als PEM-Zelle bezeichnet, eingesetzt werden. Selbstverständlich können jedoch auch andere Brennstoffzellensysteme verwendet werden.

Der PEM-Zelle 4 wird über eine erste Zuleitung 7 Sauerstoff und über eine zweite Zuleitung 8 Wasserstoffgas zugeführt. Der Wasserstoff wird an der Anode oxydiert und der Sauerstoff an der Kathode reduziert. Bei dieser elektrochemischen Reaktion entsteht zwischen den beiden Elektroden eine Spannung. Zur Bereitstellung einer vorgegebenen elektrischen Leistung können viele solcher Zellen durch Parallel- beziehungsweise Hintereinanderschaltung zu einem sogenannten Stack zusammengefügt werden. Bei Verwendung von reinem Wasserstoff und Sauerstoff wird von der PEM-Zelle 4 lediglich Restsauerstoff und Wasser über eine Auslaßleitung 9 abgegeben.

Bei einer solchen Anwendung im Fahrzeug wird der Sauerstoff der PEM-Zelle 4 in Form von Luftsauerstoff zugeführt. Der benötigte Wasserstoff wird vorzugsweise aus dem für die Brennkraftmaschine 1 verwendeten Kraftstoff abgetrennt. Übliche Kraftstoffe, wie zum Beispiel Diesel, Normalbenzin oder auch Methanol enthalten Kohlenwasserstoffe, aus denen auf relativ einfache Art und Weise, beispielsweise mit Hilfe einer Spaltanlage 10, Wasserstoff abgetrennt werden kann. Der genaue Aufbau solcher Spaltanlagen 10 ist prinzipiell bekannt und wird daher hier nicht weiter beschrieben. Im Gegensatz zu bekannten Anordnungen, bei denen eine möglichst vollständige Zerlegung des Kraftstoffs in Wasserstoff und ein sauberes Restgas, das anschließend an die Umgebung abgegeben wird, erfolgt, wird bei der gezeigten Anordnung vorzugsweise nur ein Teil des Wasserstoffs aus dem Kraftstoff abgetrennt und die verbleibenden Kraftstoffbestandteile anschließend in der Brennkraftmaschine 1 weiterverwertet.

Die Abtrennung des Wasserstoffs von den verbleibenden Kraftstoffbestandteilen erfolgt in einer H₂-Trennanlage 11, wobei der abgetrennte Wasserstoff über eine Versorgungsleitung 12 der PEM-Zelle 4 zugeführt. In dieser Versorgungsleitung 12 kann zusätzlich ein H₂-Zwischenspeicher 13 angeordnet werden. Dieser H₂-Zwischenspeicher 13 kann zum einen dazu verwendet werden, beim Fahrzeugstart die PEM-Zelle 4 solange mit Wasserstoff zu versorgen, bis die Wasserstoffversorgung über die Spaltanlage 10 betriebsbereit ist. Zum anderen ist es möglich, die PEM-Zelle 4 auch bei abgeschalteter Brennkraftmaschine 1 zur Bereitstellung von elektrischer Energie weiterhin zu betreiben, wobei in diesem Fall der Wasserstoff aus dem H₂-Zwischenspeicher 13 zugeführt wird. Im Normalbetrieb kann dann der Wasserstoff auch von der H₂-Trennanlage 11 unter Umgehung des H₂-Zwischenspeichers 13 über eine Umgehungsleitung 14 direkt der PEM-Zelle 4 zugeführt werden. Zur Trennung des Wasserstoffs von den restlichen Kraftstoffbestandteilen kann eine beliebige aus dem Stand der Technik bekannte Vorrichtung 11 Verwendung finden, beispielsweise auf der Basis von Metallfolien.

Die in der H₂-Trennanlage 11 verbliebenen Kraftstoffbestandteile werden über eine Entsorgungsleitung 15 abgeführt. Für die Verwertung dieser Kraftstoffbestandteile stehen mehrere Möglichkeiten zur Verfügung. Flüssige Bestandteile können über eine Leitung 17 in den Kraftstofftank 2 zurückgeführt werden. Gasförmige Bestandteile können der Brennkraftmaschine 1 über eine Leitung 18 entweder direkt oder vorzugsweise über einen Gemischbilder 16, der auch mit der Kraftstoffleitung 3 verbunden ist, zugeführt werden. In diesem Fall ist der Gemischbilder 16 über eine weitere Leitung 19 mit der Brennkraftmaschine 1 verbunden.

In der Entsorgungsleitung 15 kann zusätzlich ein Zwischenspeicher 20 für die verbleibenden Kraftstoffbestandteile vorgesehen werden. Dies hat den Vorteil, daß die verbleibenden Kraftstoffbestandteile zwischengespeichert und erst bei Bedarf der Brennkraftmaschine 1 zugeführt werden können. Für den Fall, daß die PEM-Zelle 4 auch bei Stillstand der Brennkraftmaschine 1 betrieben werden soll, ist die Verwendung eines solchen Zwischenspeichers 20 besonders vorteilhaft. Im Zwischenspeicher 20 können die Kraftstoffbestandteile dann ganz oder teilweise kondensiert und anschließend dem Kraftstofftank 2 zugeführt werden. Die gasförmigen Kraftstoffbestandteile werden dann wiederum über den Gemischbilder 16 der Brennkraftmaschine 1 zugeführt.

Neben dem oben beschriebenen Verfahren mit Hilfe der Spaltanlage 10 können jedoch auch beliebige andere Verfahren verwendet werden, um aus dem Kraftstoff Wasserstoff teilweise oder vollständig abzutrennen, beispielsweise auch durch Reformierung des Kraftstoffs.

Der von der PEM-Zelle 4 erzeugte Strom wird den elektrischen Verbrauchern 5 im Fahrzeug zugeführt. Außerdem kann der erzeugte Strom zum Laden einer Batterie 6, die zum Starten der PEM-Zelle 4 und/oder der Spaltanlage 10 benötigt wird, eingesetzt werden. Eine Lichtmaschine wird bei diesem System nicht mehr verwendet.

Deren Funktion wird vollständig durch die PEM-Zelle (4) wahrgenommen.

Ein Verfahren zum Betreiben des oben beschriebenen Systems wird im folgenden näher erläutert. Da bei der Erzeugung des Wasserstoffs der flüssige Kraftstoff nicht vollständig zerlegt, sondern nur ein Teil des Wasserstoffs abgetrennt wird, müssen die verbleibenden Kraftstoffbestandteile weiterverwertet werden. Hierfür stehen verschiedene Möglichkeiten zur Verfügung. Zum einen können gasförmige Reste im Betrieb der Brennkraftmaschine 1 entweder direkt oder über den Gemischbilder 16 zur Verwertung zugeführt werden. Zum anderen können gasförmige Reste auch im Zwischenspeicher 20 gepuffert und erst mit zeitlicher Verzögerung der Brennkraftmaschine 1 direkt oder wiederum über den Gemischbilder 16 zugeführt werden. Möglich ist es hierbei auch, die Reste aus dem Zwischenspeicher 20 nur unter vorgegebenen Betriebsbedingungen zu verwerten. Bleiben bei der Wasserstoffabtrennung flüssige Bestandteile zurück, so können diese als Kondensat dem Kraftstofftank 2 zugeführt werden. Hierbei ist jedoch darauf zu achten, daß die Kraftstoffqualität, insbesondere die Zündfähigkeit, durch die Wasserstoffabtrennung nicht übermäßig beeinträchtig wird.

Die PEM-Zelle 4 kann beliebig lange betrieben werden, solange die Brennkraftmaschine 1 in Betrieb und genügend Kraftstoff vorhanden ist. Der Betrieb der PEM-Zelle 4 ist jedoch nicht, wie bei einer Lichtmaschine, auf die Betriebszeiten der Brennkraftmaschine 1 eingeschränkt. Es ist bei diesem System vielmehr auch möglich, bei Stillstand der Brennkraftmaschine 1 weiterhin elektrische Energie zu erzeugen. Hierzu sind verschiedene Konzepte möglich. Bei einer kurzfristigen Unterbrechung - im Bereich von wenigen Minuten - kann in der Spaltanlage 10 solange Wasserstoff erzeugt werden, bis der Zwischenspeicher 20 durch die verbleibenden Kraftstoffbestandteile gefüllt ist. Bei mittleren Unterbrechungen - im Bereich von 0,5 bis 1,5 Stunden - kann die Spaltanlage 10 abgeschaltet und die PEM-Zelle 4 durch Wasserstoff aus dem H₂-Zwischenspeicher 13 versorgt werden.

Hierbei muß jedoch darauf geachtet werden, daß im H₂-Zwischenspeicher 13 zumindest soviel Wasserstoff verbleibt, wie bei einen Neustart der Brennkraftmaschine 1 benötigt wird. Bei längerfristigen Unterbrechungen bleibt die Möglichkeit, die verbleibenden Kraftstoffbestandteile zu Kondensieren und in den Kraftstofftank 2 zurückzuleiten. Hierbei muß jedoch die Kraftstoffqualität im Kraftstofftank 2 hinsichtlich ausreichender Zündfähigkeit überwacht werden. Als Voraussetzung für den Betrieb der PEM-Zelle 4 bei längerfristigen Motorstillstand kann vorgesehen werden, daß der Kraftstofftank ausreichend, beispielsweise zu mindestens 75%, gefüllt ist. Bei nicht ausreichendem Füllstand besteht nämlich das Risiko, daß durch die Abtrennung von Wasserstoff die Zündfähigkeit des verbleibenden Kraftstoffs so weit verringert wird, daß er für die Verbrennung in der Brennkraftmaschine 1 nicht mehr geeignet ist.

Um dieses Problem zu umgehen kann zur Auffrischung der Spaltfähigkeit die Zugabe von geeigneten Additiven mit leichtsiedenden Komponenten in den Kraftstofftank 2 vorgesehen werden. In diesem Fall kann dann die Spaltanlage 10 relativ einfach ausgeführt werden.

Bei der Inbetriebnahme des Fahrzeugs kann die PEM-Zelle 4 kurzfristig mit Wasserstoff aus dem H₂-Zwischenspeicher 13 versorgt werden. Erst nach einer vorgegebenen Betriebszeit der PEM-Zelle 4 wird dann die Spaltanlage 10 gestartet. Die elektrische Energie zum Starten der PEM-Zelle 4 und/oder der Spaltanlage 10 wird vorzugsweise durch eine Batterie 6 bereitgestellt. Die Batterie 6 kann bei einem solchen System im Vergleich zu herkömmlichen Fahrzeugbatterien gegebenenfalls entsprechend kleiner dimensioniert werden.

Um den Wirkungsgrad des Gesamtsystems weiter zu verbessern ist es außerdem möglich, die Leistung der PEM-Zelle 4 den Anforderungen laufend anzupassen. So muß die PEM-Zelle 4 nicht mit konstanter Last betrieben werden, sondern kann in Abhängigkeit vom benötigten Strom eingestellt werden. Hierzu kann ein Steuergerät vorgesehen werden, das die Solleistung der PEM-Zelle 4 in Abhängigkeit von der Anzahl und dem Bedarf der zugeschalteten elektrischen Verbrauchern 5 vorgibt.

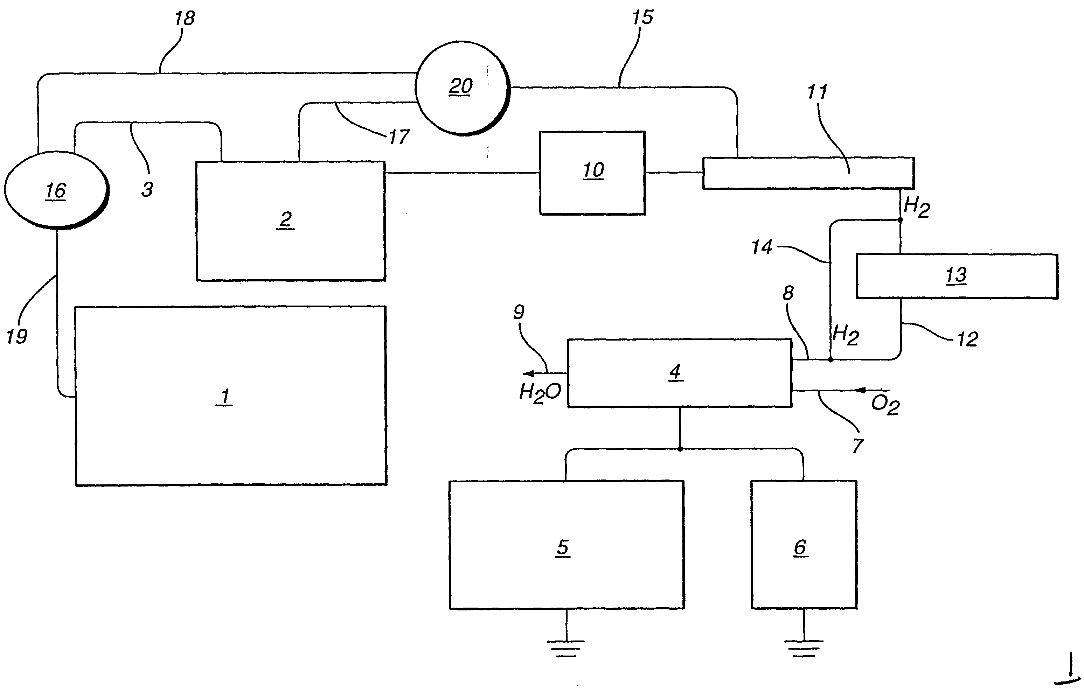

## Patentansprüche

1. Mittels einer Brennkraftmaschine (1) angetriebenes Kraftfahrzeug, welches zur Erzeugung von elektrischer Energie zum Betreiben von elektrischen Verbrauchern (5) anstelle einer Lichtmaschine ein Brennstoffzellensystem (4) aufweist,
**dadurch gekennzeichnet,**
**dass** das Fahrzeug eine Vorrichtung (10, 11) zum teilweisen Abtrennen von Wasserstoff aus dem für die Brennkraftmaschine (1) verwendeten Kraftstoff aufweist, der eine Versorgungsleitung (12) zur Zufuhr des abgetrennten Wasserstoffes zum Brennstoffzellensystem und eine Entsorgungsleitung (15) für verbleibende Knaftstoffbestandteile zugeordnet sind.

2. Vorrichtung nach Anspruch 1,
**dadurch gekennzeichnet**,
die Entsorgungsleitung (15) der Zufuhr der verbleibenden Kraftstoffbestandteile zur Brennkraftmaschine (1) und/oder zu einem Kraftstofftank (2) dient.

3. Vorrichtung nach Anspruch 1,
**dadurch gekennzeichnet,**
**daß** die Vorrichtung zum Abtrennen von Wasserstoff aus einer Spaltanlage (10) und einer H₂-Trennanlage (11) besteht, wobei in der Spaltanlage (10) die Spaltung des Kraftstoffes in Wasserstoff und einen Spaltgasrest und in der H₂-Trennanlage (11) die Abtrennung des Wasserstoffes von den verbleibenden Kraftstoffbestandteilen erfolgt.

4. Vorrichtung nach Anspruch 2,
**dadurch gekennzeichnet,**
**daß** in der Versorgungsleitung (12) ein H₂-Zwischenspeicher (13) vorgesehen ist.

5. Vorrichtung nach Anspruch 1,
**dadurch gekennzeichnet,**
**daß** in der Entsorgungsleitung (15) ein Zwischenspeicher (20) für die verbleibenden Kraftstoffbestandteile vorgesehen ist.

6. Vorrichtung nach Anspruch 1,
**dadurch gekennzeichnet,**
**daß** in der Entsorgungsleitung (15) eine Vorrichtung zum zumindest teilweisen Kondensieren der verbleibenden Kraftstoffbestandteile vorgesehen ist, wobei zwischen der Vorrichtung und dem Kraftstofftank (2) eine erste Leitung (17) zur Abfuhr der flüssigen Bestandteile und/oder zwischen der Vorrichtung und der Brennkraftmaschine (1) eine zweite Leitung (18) zur Abfuhr der gasförmigen Bestandteile direkt zur Brennkraftmaschine (1) angeordnet ist.

7. Vorrichtung nach Anspruch 1,
**dadurch gekennzeichnet,**
**daß** eine Batterie (6) zum Starten des Brennstoffzellensystems (4) und/oder der Spaltanlage (10) vorgesehen ist.

8. Verfahren zum Betreiben eines mittels einer Brennkraftmaschine (1) angetriebenen Kraftfahrzeuges, bei welchem elektrische Energie zum Betreiben von elektrischen Verbrauchern (5) anstelle von einer Lichtmaschine von einem Brennstoffzellensystem (4) erzeugt wird,
**dadurch gekennzeichnet,**
**dass** im Fahrzeug Wasserstoff aus dem für die Brennkraftmaschine (1) verwendeten Kraftstoff teilweise abgetrennt wird, und der abgetrennte Wasserstoff mittels einer Versorgungsleitung (12) dem Brennstoffzellensystem (4) zugeführt und verbleibende Knaftstoffbestandteile über eine Entsorgungsleitung (15) entsorgt werden.

9. Verfahren nach Anspruch 8,
**dadurch gekennzeichnet,**
**daß** die Brennstoffzelle (4) zumindest während des Betriebs der Brennkraftmaschine (1) betrieben wird.

10. Verfahren nach Anspruch 9,
**dadurch gekennzeichnet,**
**daß** die Leistung der Brennstoffzelle (4) in Abhängigkeit vom benötigten Strom eingestellt wird.

11. Verfahren nach Anspruch 9,
**dadurch gekennzeichnet,**
**daß** die Brennstoffzelle (4) bei Bedarf auch bei Stillstand der Brennkraftmaschine (1) betrieben wird.

12. Verfahren nach Anspruch 11,
**dadurch gekennzeichnet,**
**daß** die Brennstoffzelle (4) bei stillstehender Brennkraftmaschine (1) nur solange betrieben wird, bis der H₂-Zwischenspeicher (13) einen vorgegebenen Mindest-Füllstand erreicht.

13. Verfahren nach Anspruch 11,
**dadurch gekennzeichnet,**
**daß** die Brennstoffzelle (4) bei stillstehender Brennkraftmaschine (1) nur solange betrieben wird, bis der Zwischenspeicher (20) voll ist.

14. Verfahren nach Anspruch 11,
**dadurch gekennzeichnet,**
**daß** die Brennstoffzelle (4) bei stillstehender Brennkraftmaschine (1) nur solange betrieben wird, bis die Zündfähigkeit des Kraftstoffes im Kraftstofftank (2) einen vorgegebenen Wert unterschreitet.

15. Verfahren nach Anspruch 11,
**dadurch gekennzeichnet,**
**daß** die Brennstoffzelle (4) bei stillstehender Brennkraftmaschine (1) nur solange betrieben wird, bis der Füllstand im Kraftstofftank (2) einen vorgegebenen Wert unterschreitet.

16. Verfahren nach Anspruch 9,
**dadurch gekennzeichnet,**
**daß** beim Fahrzeugstart die Brennstoffzelle (4) zuerst mit Wasserstoff aus dem Zwischenspeicher (13) versorgt wird und daß die Spaltanlage (10) erst nach einer vorgegebenen Betriebszeit der Brennstoffzelle(4) gestartet wird.

17. Verfahren nach Anspruch 9,
**dadurch gekennzeichnet,**
**daß** beim Fahrzeugstart die Spaltanlage (10) zuerst von der Batterie (6) und erst nach einer vorgegebenen Zeitdauer von der Brennstoffzelle (4) mit elektrischer Energie versorgt wird.

## Claims

1. Motor vehicle powered by an internal combustion engine (1), which, instead of a generator, has a fuel cell system (4) for producing electrical energy for the operation of electricity consumers (5),
**characterised in that**
the vehicle comprises a device (10, 11) for the partial separation of hydrogen from the fuel used for the internal combustion engine (1), with which device are associated a supply line (12) to deliver the separated hydrogen to the fuel cell system and a clearance line (15) for residual fuel constituents.

2. Device according to Claim 1,
**characterised in that**
the clearance line (15) serves to deliver the residual fuel constituents to the internal combustion engine (1) and/or to a fuel tank.

3. Device according to Claim 1,
**characterised in that**
the device for the separation of hydrogen consists of a cracking unit (10) and a H₂-separation unit (11), such that the fuel is decomposed into hydrogen and residual cracking gases in the cracking unit (10) and the hydrogen is separated from the residual fuel constituents in the H₂-separation unit (11).

4. Device according to Claim 2,
**characterised in that**
an intermediate reservoir (13) for hydrogen is provided in the supply line (12).

5. Device according to Claim 1,
**characterised in that**
an intermediate reservoir (20) for the residual fuel constituents is provided in the clearance line (15).

6. Device according to Claim 1,
**characterised in that**
a device is provided in the clearance line (15) to condense the residual fuel constituents at least partially, and between the said device and the fuel tank (2) there is arranged a first pipe (17) for removing the liquid constituents and/or between the said device and the internal combustion engine (1) there is arranged a second pipe (18) which carries the gaseous constituents directly to the internal combustion engine (1).

7. Device according to Claim 1,
**characterised in that**
a battery (6) is provided for starting the fuel cell system (4) and/or the cracking unit (10).

8. Method for operating a motor vehicle powered by an internal combustion engine (1), in which electrical energy for the operation of electricity consumers (5) is produced by a fuel cell system (4) instead of by a generator,
**characterised in that**
in the vehicle hydrogen is separated partially from the fuel used for the internal combustion engine (1), and the separated hydrogen is fed to the fuel cell system (4) via a supply line (12), while residual fuel constituents are removed via a clearance line (15).

9. Method according to Claim 8,
**characterised in that**
the fuel cell (4) is operated at least during the running of the internal combustion engine (1).

10. Method according to Claim 9,
**characterised in that**
the performance of the fuel cell (4) is adjusted as a function of the current required.

11. Method according to Claim 9,
**characterised in that**
the fuel cell (4) is if necessary operated even when the internal combustion engine (1) is not running.

12. Method according to Claim 11,
**characterised in that**
when the internal combustion engine (1) in not running, the fuel cell (4) is operated only until the intermediate hydrogen reservoir (13) has reached a specified minimum fullness condition.

13. Method according to Claim 11,
**characterised in that**
when the internal combustion engine (1) in not running, the fuel cell (4) is operated only until the intermediate reservoir (20) is full.

14. Method according to Claim 11,
**characterised in that**
when the internal combustion engine (1) in not running, the fuel cell (4) is operated only until the ignitability of the fuel in the fuel tank (2) is below a specified value.

15. Method according to Claim 11,
**characterised in that**
when the internal combustion engine (1) in not running, the fuel cell (4) is operated only until the fullness condition in the fuel tank (2) is below a specified value.

16. Method according to Claim 9,
**characterised in that**
when the vehicle is started, the fuel cell (4) is at first supplied with hydrogen from the intermediate reservoir (13), and the cracking unit (10) is only started once the fuel cell (4) has been operating for a specified time.

17. Method according to Claim 9,
**characterised in that**
when the vehicle is started, the cracking unit (10) is at first powered by the battery (6) and is only supplied with electrical energy from the fuel cell (4) after a specified time.

## Revendications

1. Véhicule automobile entraîné par un moteur à combustion (1), lequel, pour la production d'énergie électrique pour l'actionnement des consommateurs électriques (5), comporte un système à pile à combustible (4) à la place d'une génératrice, **caractérisé en ce que** le véhicule comporte un dispositif (10, 11) pour la séparation partielle d'hydrogène à partir du carburant utilisé pour le moteur à combustion (1), qui est constitué par une conduite d'alimentation (12) pour l'acheminement de l'hydrogène séparé vers le système de pile à combustible et une conduite d'élimination (15) pour les composants restants du carburant.

2. Dispositif selon la revendication 1, **caractérisé en ce que** la conduite d'élimination (15) sert à l'acheminement des composants restants du carburant vers le moteur à combustion (1) et / ou vers un réservoir de carburant (2).

3. Dispositif selon la revendication 1, **caractérisé en ce que** le dispositif pour la séparation de l'hydrogène consiste en une installation de craquage (10) et en une installation de séparation du H₂ (11), moyennant quoi dans l'installation de craquage (10) s'effectue la décomposition du carburant en hydrogène et en un reste de gaz de craquage, et **en ce que** dans l'installation de séparation du H₂ (11) s'effectue la séparation de l'hydrogène depuis les composants restants du carburant.

4. Dispositif selon la revendication 2, **caractérisé en ce que** dans la conduite d'alimentation (12) est prévu un accumulateur intermédiaire de H₂ (13).

5. Dispositif selon la revendication 1, **caractérisé en ce que** dans la conduite d'élimination (15) est prévu un accumulateur intermédiaire (20) pour les composants restants du carburant.

6. Dispositif selon la revendication 1, **caractérisé en ce que** dans la conduite d'élimination (15) est prévu un dispositif pour la condensation au moins partielle des composants restants du carburant, moyennant quoi une première conduite (17) est disposée entre le dispositif et le réservoir de carburant (2) pour l'évacuation des composants liquides et / ou une deuxième conduite (18) est disposée entre le dispositif et le moteur à combustion (1) pour l'évacuation des composants gazeux directement vers le moteur à combustion (1).

7. Dispositif selon la revendication 1, **caractérisé en ce qu'**une batterie (6) est prévue pour lancer le système à pile à combustible (4) et / ou l'installation de craquage (10).

8. Procédé d'exploitation d'un véhicule automobile entraîné au moyen d'un moteur à combustion (1), sur lequel de l'énergie électrique pour l'actionnement de consommateurs électriques (5) est engendrée par un système à pile à combustible (4) à la place d'une génératrice, **caractérisé en ce que** dans le véhicule, de l'hydrogène est séparé partiellement du carburant utilisé pour le moteur à combustion (1), **en ce que** l'hydrogène séparé est amené au système à pile à combustible (4) au moyen d'une conduite d'alimentation (12) et **en ce que** les composants restants du carburant sont éliminés par l'intermédiaire d'une conduite d' é limination (15).

9. Procédé selon la revendication 8, **caractérisé en ce que** la pile à combustible (4) est exploitée au moins pendant le fonctionnement du moteur à combustion (1).

10. Procédé selon la revendication 9, **caractérisé en ce que** la puissance de la pile à combustible (4) est réglée en fonction de l'intensité de courant requise.

11. Procédé selon la revendication 9, **caractérisé en ce que** la pile à combustible (4) est exploitée aussi au besoin à l'arrêt du moteur à combustion (1).

12. Procédé selon la revendication 11, **caractérisé en ce que** la pile à combustible (4) n'est exploitée quand le moteur 6 combustion (1) est arrêté que jusqu'à ce que l'accumulateur intermédiaire de H₂ (13) ait atteint un niveau de remplissage minimal prédéfini.

13. Procédé selon la revendication 11, **caractérisé en ce que** la pile à combustible (4) n'est exploitée quand le moteur à combustion (1) est arrêté que jusqu'à ce que l'accumulateur intermédiaire de H₂ (13) soit plein.

14. Procédé selon la revendication 11, **caractérisé en ce que** la pile à combustible (4) n'est exploitée quand le moteur à combustion (1) est arrêté que jusqu'à ce que l'inflammabilité du carburant dans le réservoir de carburant (2) soit tombée au-dessous d'une certaine valeur.

15. Procédé selon la revendication 11, **caractérisé en ce que** la pile à combustible (4) n'est exploitée quand le moteur à combustion (1) est arrêté que jusqu'à ce que le niveau de remplissage dans le réservoir de carburant (2) soit tombé au-dessous d'une certaine valeur.

16. Procédé selon la revendication 11, **caractérisé en ce qu'**au démarrage du véhicule, la pile à combustible (4) est d'abord alimentée avec de l'hydrogène en provenance de l'accumulateur interm é diaire (13), et que l'installation de craquage (10) n'est lancée qu'après un temps de fonctionnement prédéfini de la pile à combustible (4).

17. Procédé selon la revendication 11, **caractérisé en ce que** lors du démarrage du véhicule, l'installation de craquage (10) est d'abord alimentée en énergie électrique par la batterie et seulement au bout d'un intervalle de temps prédéfini par la pile à combustible (4) .
